# FASCICULE DE BREVET EUROPEEN

(11) **EP 2 280 871 B1**
(45) Date de publication et mention de la délivrance du brevet: **11.09.2013**
(21) Numéro de dépôt: 09742238.0
(22) Date de dépôt: 03.04.2009
(51) Int. Cl.: G06Q 10/08, B64F 1/36, G07F 7/06

(54) **PROCEDE ET SYSTEME DE DEPOSE AUTOMATIQUE D'OBJETS EN VUE DU TRANSPORT DESDITS OBJETS**
VERFAHREN UND SYSTEM ZUR AUTOMATISCHEN ABLAGERUNG VON OBJEKTEN FÜR IHREN TRANSPORT
METHOD AND SYSTEM FOR AUTOMATICALLY DEPOSITING OBJECTS FOR THE PURPOSE OF THEIR TRANSPORTATION

(30) Priorité: 04.04.2008 FR 0852282
(43) Date de publication de la demande: 09.02.2011
(73) Titulaire: IER, 92150 Suresnes (FR)
(72) Inventeur: HERNOT, Alexis, 75017 Paris (FR)
(74) Mandataire: Pontet Allano & Associes
(86) Numéro de dépôt international: PCT/FR2009/050570
(87) Numéro de publication internationale: WO 2009/136040

(56) Documents cités:
- WO-A-02/15115
- WO-A-2007/120266
- US-A- 6 108 636
- US-A1- 2005 051 622
- US-B1- 6 476 718
- US-B1- 6 662 078
- US-B1- 6 967 579

## Description

La présente invention concerne un procédé de dépose automatique d'objets en vue du transport desdits objets. Des exemples de l'art antérieur sont fournis par les documents US 2005/0051622 ou US 6,662,078.

L'invention concerne plus particulièrement, un procédé pouvant par exemple être mis en oeuvre dans des lieux tels que des aéroports pour la dépose de bagages par un passager de transport aérien en vue du transport des bagages dans la soute d'un avion, ou des lieux tels que des bureaux de poste pour la dépose de colis à transporter par une compagnie postale.

Actuellement, dans les aéroports, la dépose d'un bagage est un processus réalisé :
- à un comptoir d'enregistrement où un agent pèse et inscrit sur les données liées au passager (PNR) la dépose d'un bagage, ou
- à un comptoir de dépose de bagages où le passager se rend après avoir fait son enregistrement et avoir ou non imprimé une étiquette à bagage sur support papier et contenant un code à barres. Un tel comptoir est aussi tenu par au moins un agent.

Dans ces deux cas, un agent contrôle la carte d'embarquement du passager, le nombre de bagages déposés et met à jour le système d'information centralisé de la compagnie aérienne.

Ceci signifie que la compagnie aérienne doit employer un nombre suffisant d'agent pour tenir les déposes de bagage. Ceci engendre un coût pour la compagnie aérienne ainsi qu'une baisse de service client. En effet dans de nombreux cas l'agent effectue des tâches additionnelles : changement de siège, discussion avec le passager, information. Ces tâches prennent du temps, diminuent l'efficacité de l'agent et génèrent des files d'attente.

Par ailleurs, dans la plupart des cas, la dépose de bagage se fait à des comptoirs qui sont réservés pour un trajet particulier, et un seul. Ainsi le nombre d'agents augmente en fonction du nombre de trajets, surtout lorsque les heures de départ des différents trajets sont proches les unes des autres et qu'il faut réaliser la dépose des bagages de plusieurs trajets en même temps.

Un but de la présente invention est de remédier aux inconvénients précités.

Un autre but de l'invention est de proposer un procédé permettant de réaliser la dépose d'objets avec moins d'agents et une qualité de service plus importante.

Enfin, un autre but de l'invention est de proposer un procédé de dépose d'objets, utilisable en même temps par plusieurs compagnies pour plusieurs trajets, tout en diminuant le temps et l'espace de dépose d'objets.

L'invention propose d'atteindre les buts précités par un procédé de dépose automatique d'objets en vue du transport desdits objets selon la revendication 1. En particulier le procédé comprend:
- une phase, dite de dépose, comprenant les étapes suivantes :
   ■ dépose par un utilisateur d'une première étiquette d'identification électromagnétique sur un objet à transporter,
   ■ dépose par ledit utilisateur dudit objet à transporter sur des moyens d'acheminement,
   ■ lecture, par des premiers moyens de lecture, d'une donnée d'identification depuis ladite première étiquette d'identification électromagnétique, et
   ■ mémorisation, dans des moyens de mémorisation, de ladite donnée d'identification lue en association avec des données relatives audit transport préalablement mémorisées ;
- une phase d'acheminement dudit objet en vue de son transport.

Selon l'invention, les objets à transporter sont soit des bagages à transporter lorsque l'invention est appliquée à la dépose automatique de bagages dans des lieux tels que des aéroports, soit des colis lorsque l'invention est appliquée à la dépose automatique de colis dans des lieux tels que des bureaux de poste ou similaire.

Dans tout ce qui suit, « utilisateur » désigne un voyageur lorsque l'invention est appliquée à la dépose automatique de bagages dans des lieux tels que des aéroports, ou un client d'une compagnie postale lorsque l'invention est appliquée à la dépose automatique de colis dans des lieux tels que des bureaux de poste ou similaire.

La première étiquette d'identification, qui est une étiquette électromagnétique, peut être associée à l'utilisateur comme par exemple une étiquette RFID avec un numéro d'utilisateur ou voyageur fréquent.

La première étiquette électromagnétique peut être une étiquette d'identification de type RFID (Radio Frequency Identification), éventuellement réutilisable. Le risque de mauvais routage de bagage est ainsi réduit car le passager pose une étiquette d'identification RFID, par exemple permanente, plus robuste et plus facile à lire que l'étiquette papier actuelle pourvue d'un code à barres. Ceci se traduit par une réduction substantielle de distribution des bagages mal routés par les compagnies aériennes et une amélioration du service client.

Le procédé selon l'invention permet de ne plus avoir d'agents, pour la réalisation de la phase de dépose pendant laquelle l'objet est déposé par l'utilisateur. La compagnie aérienne ou postale peut ainsi économiser le salaire de l'agent présent sur le site de dépose d'objets à transporter.

De plus, grâce au procédé selon l'invention la dépose d'objets pour plusieurs trajets peut se faire en même temps. Il n'est pas nécessaire de faire appel à des personnes supplémentaires puisque les utilisateurs déposeront leurs bagages eux-mêmes.

Pour les utilisateurs, l'avantage réside dans un temps de dépose de d'objets extrêmement réduit car les files d'attentes sont supprimées : chaque utilisateur passe beaucoup moins de temps à déposer son ou ses objets(s) et la multiplication des systèmes de dépose d'objets est aisée car elle ne requiert pas de gestion de personnel.

Pour l'aéroport ou le bureau de poste, le procédé selon l'invention représente une utilisation bien plus efficace de l'espace car sur un espace identique à un comptoir un plus grand nombre d'utilisateurs peut déposer des objets (bagages ou colis). Cet avantage est d'autant plus important que le système permet d'être utilisé par plusieurs compagnies en charge du transport en parallèle, ce qui est rarement le cas actuellement.

Suivant une version particulière de l'invention, le procédé selon l'invention peut comprendre, avant la phase d'acheminement dudit objet en vue de son transport :
- une phase d'acheminement dudit objet vers des deuxièmes moyens de lecture ; et
- une phase, dite de traitement, réalisée hors de portée dudit utilisateur et comprenant les étapes suivantes :
   ■ lecture automatique de la donnée d'identification depuis la première étiquette d'identification électromagnétique, par lesdits deuxième moyens de lecture,
   ■ écriture, sur une deuxième étiquette d'identification, d'au moins une partie des données relatives audit transport associées à ladite donnée d'identification lue, et
   ■ pose de ladite deuxième étiquette d'identification sur ledit objet.

Ainsi, grâce au procédé selon l'invention, il suffit seulement d'un agent non qualifié pour la pose de la deuxième étiquette d'identification. Cette deuxième phase peut être réalisée en dehors de la zone accessible par les passagers et hors de la vue des passagers.

Avantageusement, la deuxième étiquette d'identification peut être soit une étiquette électromagnétique, par exemple RFID, soit une étiquette à code barre ou encore une combinaison des deux. Lorsque cette deuxième étiquette d'identification est une étiquette RFID, elle peut être utilisée par la compagnie aérienne ou postale pour d'autres applications de gestion de bagages ou colis utilisant les RF (Radiofréquences), comme par exemple le tri des bagages ou colis.

Le procédé selon l'invention comprend en outre une phase préalable d'enregistrement des données relatives au transport dans des moyens de mémorisation , lesdites données comprenant :
- des données relatives à l'utilisateur auquel est associé l'objet,
- des données relatives au nombre total d'objets (306) déclaré par ledit utilisateur, et/ou
- des données relatives à la destination, au trajet et à l'heure du transport.

Les avantages du procédé selon l'invention sont augmentés lorsque l'utilisateur s'est enregistré au préalable, par exemple sur une borne prévue à cet effet, sur Internet ou par téléphone.

Ainsi, le procédé selon l'invention peut comprendre une identification de l'utilisateur auquel sont associés les bagages ou colis à transporter, lors de la phase de dépose, avant la lecture automatique de la première étiquette d'identification par les premiers moyens de lecture. L'utilisateur qui s'est préalablement enregistré s'identifie au moyen d'une pièce d'identité, un code secret ou autre, et peut ainsi commencer à déposer ses bagages ou colis sur lesquels il a déposé une première étiquette d'identification électromagnétique.

La phase de dépose comprend une mesure du poids et/ou des dimensions du bagage et/ou un enregistrement, dans des moyens de mémorisation, dudit poids et/ou desdites dimensions en association avec les données relatives au transport. Cette mesure peut en particulier se faire lors de la lecture de la première étiquette d'identification par les premiers moyens de lecture. Ainsi, le poids du bagage ou du colis peut être contrôlé. Si le poids est supérieur à un poids maximal, le procédé selon l'invention peut comprendre un affichage sur des moyens d'affichage d'une indication invitant le passager ou l'utilisateur à payer une somme d'argent pour le surplus de poids. Le paiement peut se faire soit directement dans la zone de dépose, par exemple par une carte de crédit, soit à un comptoir se trouvant dans l'aéroport ou le bureau de poste près de la zone de dépose.

Avantageusement, les moyens de mémorisation peuvent être accessibles par un système d'information d'une compagnie en charge du transport. Les moyens de mémorisation peuvent aussi faire partie d'un tel système qui peut être en communication avec :
- les premiers et/ou les deuxièmes moyens de lecture,
- les moyens d'écriture, et
- éventuellement les moyens d'acheminement ;
et qui peut réaliser la commande de ces différents moyens et la gestion des échanges de données entre ces moyens.

Suivant une particularité avantageuse du procédé selon l'invention, la phase de dépose peut comprendre une étape de prise ou de lecture d'une donnée biométrique de l'utilisateur, i.e. du passager, par exemple une prise d'empreinte digitale, d'empreinte de l'iris, d'une photo faciale. La même donnée biométrique est lue ou prise lors de la phase d'embarquement. La donnée biométrique fournie lors de la phase d'embarquement est alors comparée à celle fournie lors de la phase de dépose. Cette comparaison permet une réconciliation très fiable entre la personne ayant déposé un bagage et la personne embarquant sur le vol.

Dans un exemple d'application particulier, le procédé selon l'invention peut être mis en oeuvre pour la dépose automatique de bagages dans un aéroport pour une ou plusieurs compagnies de voyages.

Dans un autre exemple d'application particulier, le procédé selon l'invention peut être mis en oeuvre pour la dépose automatique de colis dans un lieu tel qu'un bureau de poste ou similaire.

Suivant un autre aspect de l'invention, il est proposé un système de dépose automatique d'objets en vue du transport desdits objets, ledit système comprenant :
- des premiers moyens de lecture d'une donnée d'identification depuis une première étiquette d'identification électromagnétique disposée par un utilisateur sur un objet à transporter,
- des moyens de mémorisation, en communication avec lesdits premiers moyens de lecture, prévus pour mémoriser ladite donnée d'identification en association avec des données relatives audit transport préalablement mémorisées, et
- des moyens d'acheminement prévus pour acheminer ledit objet déposé par ledit utilisateur sur lesdits moyens d'acheminement, en vue du transport dudit objet.

Avantageusement, ledit système peut en outre comprendre
- des moyens d'acheminement de l'objet, des premiers moyens de lecture à des deuxièmes moyens de lecture,
- des deuxièmes moyens de lecture de la donnée d'identification depuis la première étiquette d'identification, lesdits deuxièmes moyens de lecture étant disposés hors de portée de l'utilisateur, et
- des moyens d'écriture, sur une deuxième étiquette d'identification, des données relatives audit transport associées à ladite donnée d'identification lue par lesdits deuxièmes moyens de lecture, ladite deuxième étiquette d'identification étant prévue pour être disposée sur ledit objet.

Les moyens d'écriture peuvent être des moyens d'impression, en particulier des imprimantes, avantageusement disposés sensiblement au niveau des deuxièmes moyens de lecture. Lorsque la deuxième étiquette d'identification est une étiquette électromagnétique, et plus particulièrement une étiquette RFID, les moyens d'écriture peuvent comprendre au moins une antenne électromagnétique ou RFID prévue pour écrire des données dans la deuxième étiquette RFID.

Les différentes moyens composant le système peuvent être en communication entre eux et avec un système d'informations centralisé grâce et au travers d'un module de gestion, qui est en outre en communication avec le système d'information centralisé. Un tel module peut réaliser la commande d'au moins une partie des différents moyens composant le système.

Dans un mode de réalisation particulier, les différentes moyens composant ledit système peuvent être en communication, au moins de manière indirecte, avec le système d'information centralisé de la compagnie en charge du transport qui peut réaliser la commande de tout ou partie de ces moyens.

Avantageusement, ledit système peut en outre comprendre des moyens de mesure du poids et/ou de la dimension de l'objet, intégrés aux moyens d'acheminement des objets au niveau des premiers moyens de lecture.

Dans un mode de réalisation particulier, les moyens d'acheminement comprennent au moins un convoyeur. Les premiers et les deuxièmes moyens de lecture comprennent des antennes RFID, disposés sur le trajet d'acheminement des objets. Par rapport au sens d'acheminement des objets, les premiers moyens de lecture sont disposés en amont des deuxièmes moyens de lecture.

Dans un mode de réalisation particulier, les antennes RFID peuvent être déposées sur des supports mobiles, souples ou non, disposés de manière sensiblement perpendiculaire à la direction de passage des objets et qui :
- au repos forment une barrière ou un rideau par rapport au sens de passage des objets et,
- au contact avec les objets se déplacent vers une position effacée pour laisser passer les objets.

Selon un autre mode de réalisation particulier, les antennes RFID peuvent aussi être disposées sur un portique que les objets traversent lors de leur acheminement. Ledit système comprend au moins un premier portique sur lequel sont disposés les premiers moyens de lecture et, éventuellement, un deuxième portique sur lequel sont disposés les deuxièmes moyens de lecture.

Les moyens de mémorisation peuvent être en communication avec un système d'information centralisé d'une compagnie en charge du transport, c'est-à-dire une compagnie aérienne ou une compagnie postale.

Les moyens d'écriture sont en communication avec les deuxièmes moyens de lecture, ou les moyens de mémorisation ou les deux ou encore avec le système d'information centralisé de la compagnie en charge du transport. Les données à écrire sont envoyées vers les moyens d'écriture par les deuxièmes moyens de lecture ou les moyens de mémorisation ou encore par le système d'information centralisé de la compagnie en charge du transport des objets.

Ledit système peut être mis en ouvre pour la dépose automatique de bagages dans un aéroport en vue du transport aérien desdits bagages ou pour la dépose automatique de colis dans un bureau de poste en vu du transport desdits colis.

Ledit système peut en outre comprendre des moyens de lecture ou de prise d'une donnée biométrique de l'utilisateur, i.e. du passager, au moment de la dépose de bagages, par exemple des moyens de prise d'empreinte digitale, d'empreinte de l'iris, d'une photo faciale. L'installation peut comprendre dans ce cas des moyens de mémorisation de la donnée biométrique prise ou lue au moment de la dépose de bagages en relation avec des données d'identification de l'utilisateur et/ou des données relatives aux bagages déposés par cet utilisateur. Ledit système peut alors comprendre également des moyens de lecture ou de prise de la même donnée biométrique au moment de l'embarquement, et des moyens de comparaison de la donnée prise ou lue au moment de l'embarquement à la donnée prise ou lue au moment de la dépose. Ces moyens permettent une réconciliation très fiable entre la personne ayant déposé un bagage et la personne embarquant sur le vol.

Suivant encore un autre aspect, il est proposé une installation de dépose automatique d'objets en vue du transport desdits objets, ladite installation comprenant :
- une pluralité de premiers modules de lecture, chacun comprenant des premiers moyens de lecture d'une donnée d'identification depuis une première étiquette d'identification électromagnétique disposée, par un utilisateur, sur un objet à transporter,
- des moyens de mémorisation, en communication avec chacun desdits premiers modules de lecture, et prévus pour mémoriser des données d'identification lues par lesdits premiers modules de lecture, et
- des moyens d'acheminement dudit objet déposé sur lesdits moyens d'acheminement par ledit utilisateur, en vue du transport dudit objet.

Avantageusement, ladite installation peut en outre comprendre
- des moyens d'acheminement des bagages des premiers modules de lecture à au moins un deuxième module de lecture,
- au moins un deuxième module de lecture comprenant des deuxièmes moyens de lecture de la donnée d'identification depuis la première étiquette d'identification électromagnétique,
- au moins un module d'écriture, sur une deuxième étiquette d'identification, des données relatives audit transport associées à ladite donnée d'identification lue par lesdits deuxièmes moyens de lecture, ladite deuxième étiquette d'identification étant prévue pour être disposée sur ledit objet.

D'autres avantages et caractéristiques apparaîtront à l'examen de la description détaillée d'un mode de réalisation nullement limitatif, et des dessins annexés sur lesquels :
- la figure 1 est un organigramme illustrant un exemple d'enchaînement de différentes opérations lors d'une phase de dépose d'une version particulière du procédé selon l'invention mis en oeuvre pour la dépose automatique de bagages ;
- la figure 2 est un organigramme illustrant un exemple d'enchaînement de différentes étapes lors d'une deuxième phase d'une version particulière du procédé selon l'invention mis en ouvre pour la dépose de bagages ;
- la figure 3 est une représentation schématique d'un exemple de système mis en oeuvre pour la dépose automatique de bagages ;
- la figure 4 est une représentation schématique d'un exemple de système, mis en oeuvre pour la dépose automatique de bagages, au niveau des premiers moyens de lecture ;
- la figure 5 est une représentation schématique d'un exemple de système, mis en oeuvre pour la dépose automatique de bagages, au niveau des deuxièmes moyens de lecture ; et
- la figure 6 est une représentation schématique d'une installation, mise en oeuvre pour la dépose automatique de bagages, au niveau des premiers modules de lecture.

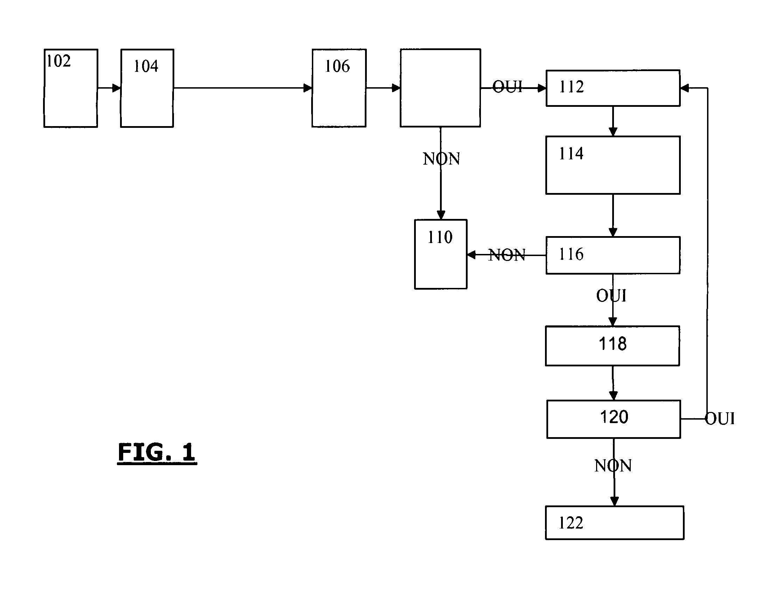

La figure 1 montre un exemple de déroulement des différentes étapes lors d'une phase de dépose d'un procédé selon l'invention pendant laquelle un passager réalise la dépose d'un ou plusieurs bagages.

Lors de l'étape 102, le passager s'enregistre sur un vol et déclare le nombre de bagages qu'il souhaite enregistrer. Cette première étape 102 peut être réalisée dans l'aéroport mais aussi à distance, par exemple lors d'une réservation sur le site Internet d'une compagnie de voyage, cette réservation pouvant par exemple être réalisée chez soi ou au bureau. Cette étape 102 est très importante en termes de sécurité car elle permet de contrôler qu'une personne mal intentionnée ne dépose pas de bagage en lieu et place du passager. En effet les cartes d'accès à bord peuvent être imprimées sur du papier standard chez soi, au bureau,...Il y a donc une possibilité simple de dupliquer cette carte d'accès à bord. Une personne mal intentionnée ayant récupéré une carte d'accès à bord pourrait se présenter pour déposer un bagage à la place d'un passager. Si le véritable passager a déjà déposé son bagage, le système refusera et demandera au passager d'aller à un comptoir manuel afin de contrôler son identité. Si la personne mal intentionnée a déposé le bagage en premier, c'est le véritable passager qui est bloqué et devra alors se présenter à un comptoir. Après avoir prouvé son identité, par exemple au moyen d'un code secret, il sera possible de retirer le premier bagage déposé par la personne mal intentionnée et d'accepter celui du passager.

De même un passager n'ayant indiqué aucun bagage à l'enregistrement mais ayant changé d'avis doit se rendre à un comptoir manuel.

Avantageusement, le passager peut aussi s'enregistrer en utilisant une pièce d'identité biométrique.

Après s'être enregistré et avoir déclaré le nombre de bagages à déposer, le passager attache une étiquette radio fréquence (RFID) à son bagage à l'étape 104. Cette étiquette peut être une étiquette réutilisable sur plusieurs vols.

En aéroport, lors de l'étape 106, le passager s'identifie sur un système de dépose automatique de bagage en présentant par exemple sa carte d'accès à bord, en introduisant sa carte de voyageur fréquent, en indiquant son nom, en présentant la pièce d'identité biométrique utilisée pour l'enregistrement lors de l'étape 102. Pour réaliser cette identification, ledit système peut comprendre des moyens de lecture d'une pièce d'identité, éventuellement biométrique, en communication avec le système d'information de la compagnie aérienne. Le système peut en comprendre des moyens de mesure de caractéristiques biométriques du passager pour valider l'identité du passager.

Après la vérification de l'identité du passager, à l'étape 108, ledit système entre communication avec le système d'information de la compagnie aérienne pour vérifier si le passager est autorisé à déposer des bagages.

Si le passager n'est pas autorisé à déposer un ou plusieurs bagages, le système invite le passager à se présenter à un comptoir tenu par un agent à l'étape 110.

Si le passager est autorisé à déposer un ou plusieurs bagages, à l'étape 112 le système invite le passager à déposer son premier bagage sur les moyens d'acheminement du bagage, par exemple un convoyeur, vers les premiers moyens de lecture de l'étiquette RFID, à savoir une plusieurs antennes radiofréquences, par exemple disposés au niveau d'un portique de lecture RF.

A l'étape 114, le convoyeur achemine le bagage sous le portique de lecture RF. L'étiquette est lue par les antennes RF et système et le numéro de l'étiquette est ajouté aux informations sur le passager (PNR) qui sont stockées dans les systèmes d'information de la compagnie aérienne.

Si la compagnie aérienne a opté pour l'option « pesée » une balance est incorporée au convoyeur à l'endroit où est placé la portique RF. Le poids du bagage est mesuré à l'étape 116 et le résultat de la pesée est ajouté au PNR conjointement au numéro de l'étiquette RFID. Le système est conçu de telle manière que le passager ne peut pas atteindre son bagage lorsque celui si est sous le tunnel RF. Ceci implique qu'il ne peut pas trafiquer la pesée.

Si, le poids du bagage est supérieur à une limite, fixée par la compagnie alors le système invite le passager à se présenter à un comptoir pour régler la somme couvrant le surplus de poids. Ledit système peut aussi comprendre des moyens pour régler cette somme sur place grâce à des moyens de paiement automatiques par exemple par carte bancaire ou par espèce.

Le système comprend en outre des moyens d'affichage et de visualisation par le passager des différentes étapes de dépose de bagage. Ainsi, un voyant vert s'allume si le PNR est correctement mis à jour.

A l'étape 118, le convoyeur achemine le bagage vers les deuxièmes moyens de lecture de l'étiquette RFID.

A l'étape 120, le système interroge le passager ou le système d'information, pour déterminer si un autre bagage est à déposer. Si oui, le système invite le passager à déposer le bagage suivant, et les étapes 112 à 120 sont réitérées pour chacun des bagages. Sinon, un reçu indiquant au passager que son ou (ses bagages) a (ont) été enregistré(s) à l'étape 122 et un autre passager peut alors déposer ses bagages.

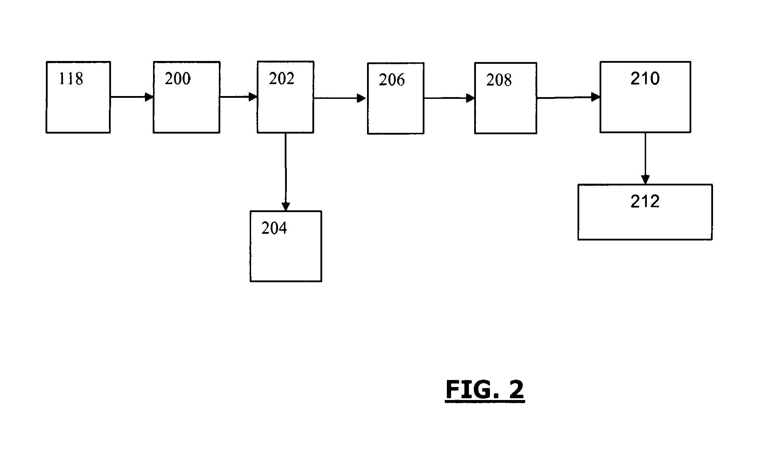

La figure 2 illustre un exemple de déroulement des différentes étapes lors d'une deuxième phase d'un procédé selon l'invention pendant laquelle les bagages déposés par un passager sont traités par un agent non qualifié.

A l'étape 118, le bagage est acheminé par le convoyeur des premiers moyens de lecture vers les deuxièmes moyens de lecture de l'étiquette RFID. Ces deuxièmes moyens de lecture peuvent comprendre un portique comportant une ou plusieurs antennes et au travers duquel les bagages sont acheminés par le convoyeur.

A l'étape 200, le numéro de l'étiquette RFID est lu par les deuxièmes moyens de lecture et envoyé au système d'information centralisé de la compagnie aérienne.

A l'étape, 202 le système d'information centralisé de la compagnie détermine si le bagage est identifié. Pour cela le système d'information centralisé consulte les moyens de mémorisation dans lesquels les numéros des étiquettes RFID lues par les premiers moyens de lecture sont enregistrés.

Si le bagage n'est pas identifié par le système d'information centralisé de la compagnie alors le bagage est convoyé, à l'étape 204, vers un service de gestion de bagages non identifiés.

Si le bagage est identifié par le système d'information, c'est-à-dire si le numéro de l'étiquette est reconnu par le système d'information centralisé, les informations concernant le voyage et le passager et qui sont enregistrées dans les moyens de mémorisation, notamment lors de l'étape 102, et qui sont à imprimer sur l'étiquette à bagage en papier, sont envoyées à des moyens d'impressions lors de l'étape 206.

Lors de l'étape 208, les moyens d'impression impriment les informations reçues sur une étiquette à bagage classique, par exemple au standard IATA avec un code barre.

Un agent récupère alors l'étiquette à bagage imprimé et la pose sur le bagage en cours de traitement lors de l'étape 210.

Après avoir posé l'étiquette sur le bagage, l'agent fait avancer le bagage qui passe alors dans un processus de tri standard à l'étape 212. Le bagage traité passe dans le système de tri bagage et le bagage suivant est alors traité selon les étapes 200-212, ce qui déclenche l'impression de l'étiquette associée.

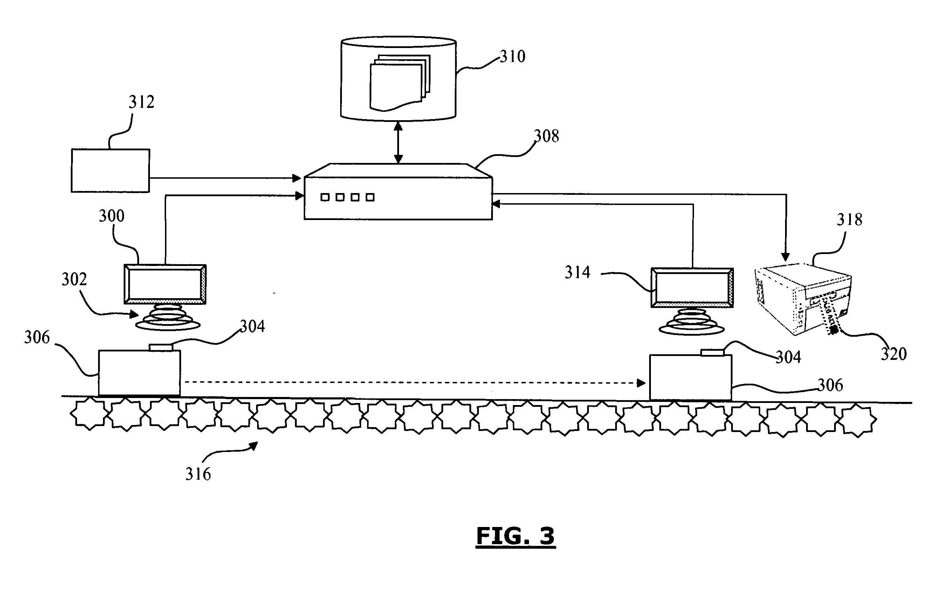

La figure 3 est une représentation très schématique d'un système pour la réalisation du procédé de dépose selon l'invention. Le système comprend des premiers moyens de lecture 300, par ondes radiofréquences 302 d'une étiquette radiofréquence 304 disposée sur un bagage 306. Les premiers moyens de lecture sont en communication avec le système d'information centralisé 308 de al compagnie aérienne. Les informations lues par les premiers moyens de lecture 300, et notamment le numéro de l'étiquette RFID 304, sont envoyées au système d'information centralisé 308 de la compagnie. Le système d'information centralisé enregistre ces informations, dans des moyens de mémorisation 310, en association avec les informations relatives au passager déposant le bagage 306, préalablement identifié grâce à des moyens d'identification 312 en communication avec le système d'informations centralisé 308.

Le bagage est ensuite acheminé des premiers moyens de lecture 300 vers les deuxièmes moyens de lecture 314 grâce à des moyens d'acheminement 316. Les deuxièmes moyens de lecture 314 réalisent la lecture par ondes radiofréquences 318, de l'étiquette radiofréquence 304 du bagage 306. Les informations lues, et notamment le numéro de l'étiquette RFID 304, sont envoyées au système d'information centralisé 308. Ce dernier consulte les moyens de mémorisation pour déterminer, si ce bagage est bien identifié et détermine le passager à qui est associé ce bagage. Puis, le système d'information centralisé 308 envoie les informations relatives au voyage et au passager aux moyens d'impression 318. Ces moyens d'impression 318 réalisent une impression des informations reçues sur une étiquette à bagage papier 320 au format classique qu'un opérateur pose sur le bagage 306.

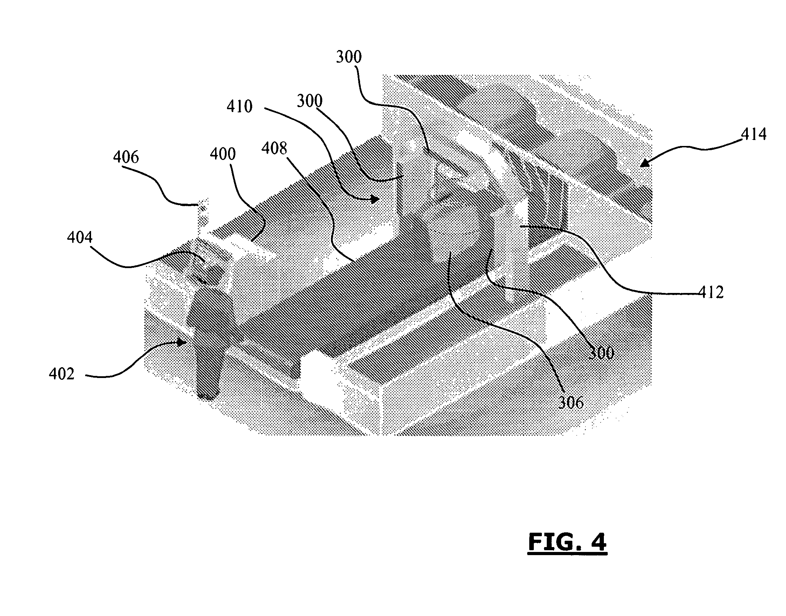

La figure 4 est une représentation schématique d'un exemple dudit système au niveau des premiers moyens de lecture. Tel que représenté, le système selon l'invention comprend un module interactif 400 agencés pour que l'utilisateur puisse s'identifier avant de déposer son ou ses bagages. Ce module interactif permet aussi d'accompagner l'utilisateur tout au long du procédé de dépose de bagage et permet de renseigner l'utilisateur lors des différentes étapes. Le module 400 comprend des moyens d'affichage 404 de différentes informations et des moyens de signalisation lumineux 406 permettent de signaler à l'utilisateur si la dépose d'un bagage est validée ou non.

Le passager 402, s'identifie grâce à tous moyens d'identification au niveau du module interactif 400. Une fois identifié, l'utilisateur dépose son bagage 306, portant une étiquette RFID, sur les moyens d'acheminement, ici un tapis convoyeur 408. Ce tapis convoyeur 408 achemine le bagage jusqu'à un premier module de lecture 410 comprenant un portique 412 comportant trois séries d'antennes radiofréquences 300. L'étiquette RFID est lue par les antennes radiofréquences.

Ledit système comprend en outre, au niveau du portique des moyens de mesure du poids du bagage (non représentés) réalisant une mesure du poids du bagage 306. Lors de la lecture de l'étiquette RFID et de la mesure du poids du bagage 306, ce dernier est hors de portée du passager 402 de manière à ce que le passager 402 ne puisse tricher sur le poids du bagage 306.

Si toutes les étapes 102-122, décrites plus haut, sont réalisées avec succès, un voyant vert s'allume au niveau des moyens de signalisation 406 pour signaler au passager 402 que la dépose du bagage s'est déroulée avec succès. Le bagage est ensuite acheminé par un convoyeur 414 jusqu'aux deuxièmes moyens de lecture.

Par ailleurs, le module interactif comprend en outre des moyens de paiement (non représentés), par exemple par carte de paiement ou espèce, lorsque le poids du bagage 306 est supérieur à un poids maximal et qu'un paiement supplémentaire est nécessaire.

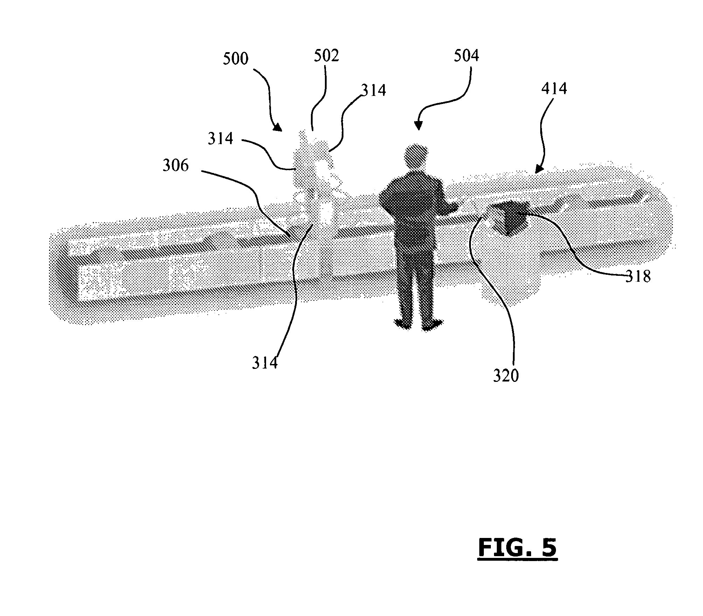

La figure 5 est une représentation schématique d'un exemple du système au niveau des deuxièmes moyens de lecture. Tel que représenté, le système selon l'invention comprend au niveau des deuxièmes moyens de lecture, un deuxième module de lecture 500 comprenant un portique 502 comportant trois séries d'antennes RFID 314. Les bagages déposés par les passagers sont acheminés jusqu'à ce portique par le convoyeur. L'étiquette RFID de chacun des bagages est lue par les antennes radiofréquences 314, envoyées au système d'informations centralisé de la compagnie, qui envoie les informations relatives au voyage et au passager à un imprimante 318 qui réalise l'impression de ces informations sur une étiquette à bagage classique 320. Un agent 504 pose l'étiquette à bagage 320 sur le bagage 306.

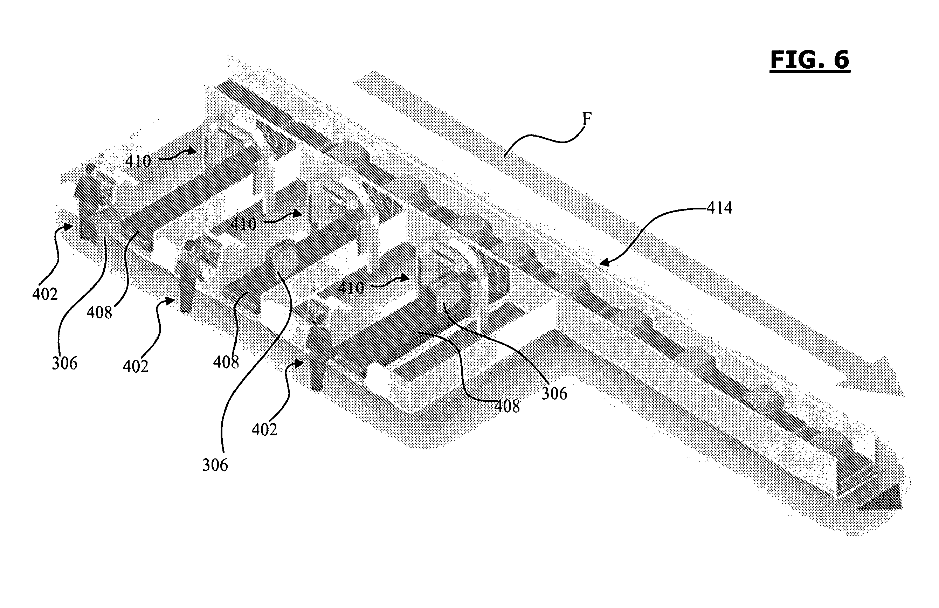

La figure 6 est une représentation schématique d'une installation au niveau des premiers moyens de lecture. Tel que représenté sur la figure 6, l'installation comprend 3 convoyeurs 408 définissant une file de dépose de bagage et débouchant sur le convoyeur 414. Un premier module de lecture, comprenant un portique et des antennes radiofréquences, est disposé sur chacun des convoyeurs 408. Les utilisateurs 402 déposent leurs bagages sur les convoyeurs 408. L'étiquette radiofréquence attachée à chacun des bagages 306 est lue par le premier module de lecture 410 correspondant et les bagages sont acheminés, par chacun des convoyeurs 408, jusqu'au convoyeur 414. Ce dernier achemine, selon le sens indiqué par la flèche F, les bagages jusqu'au deuxième module de lecture non représenté sur la figure 6.

Par ailleurs, selon l'invention, lors de la dépose de bagages, le passager peut fournir une donnée biométrique, par exemple une empreinte digitale 1 doigts, 2 doigts, iris, photo faciale, qui est associée à son enregistrement dans le système centralisé d'information de la compagnie par exemple. Cette information biométrique peut être temporaire ou permanente.

Une alternative est un enrôlement du passager qui possède alors un support, part exemple une carte ou passeport, comportant ses informations biométriques. Ce support doit alors servir d'identifiant lors de la dépose du bagage. A l'embarquement le passager fourni la même information biométrique qu'à la dépose bagage. Cette information est comparée aux informations stockées dans le système centralisé d'information. Avantageusement, l'information biométrique est "vivante", et non limitée à une information stockée sur un support, par exemple pour éviter le cas d'un support volé.

Bien entendu l'invention n'est pas limitée aux exemples qui viennent d'être décrits. Elle peut être mise en oeuvre pour la dépose automatique de colis dans un lieu tel qu'un bureau de poste. Par ailleurs, des modifications peuvent être apportées à l'invention telle que décrite ci-dessus, sans que cela sorte du champ de l'invention.

## Revendications

1. Procédé de dépose automatique d'objets (306) en vue du transport desdits objets (306), ledit procédé comprenant :
- une phase préalable d'enregistrement par un utilisateur de données relatives au transport dans des moyens de mémorisation (310), lesdites données comprenant :
■ des données relatives à l'utilisateur (402) auquel est associé chacun desdits objets (306),
■ des données relatives au nombre total desdits objets (306) déclaré par ledit utilisateur (402), et/ou
■ des données relatives à la destination, au trajet et à l'heure du transport ;
- une phase, dite de dépose, comprenant les étapes suivantes :
■ dépose par un utilisateur d'une première étiquette d'identification (304) électromagnétique sur chacun desdits objets à transporter,
■ dépose par ledit utilisateur de chacun desdits objets à transporter sur des moyens d'acheminement,
■ lecture, par des premiers moyens de lecture (300, 410), d'une donnée d'identification depuis chacune desdites premières étiquettes d'identification (304) électromagnétiques et
■ mémorisation, dans lesdits moyens de mémorisation (310), de chacune desdites données d'identification lue en association avec les données relatives audit transport préalablement mémorisées ;
- une phase d'acheminement de chacun desdits objets en vue de son transport ;
ladite phase de dépose comprenant en outre une mesure du poids et/ou des dimensions de chacun desdits objets (306) et/ou un enregistrement, dans des moyens de mémorisation (310), dudit poids et/ou desdites dimensions en association avec les données relatives au transport.

2. Procédé selon la revendication 1, **caractérisé en ce qu'**il comprend en outre, avant la phase d'acheminement de chacun desdits objets en vue de son transport :
- une phase d'acheminement de chacun desdits objets vers des deuxièmes moyens de lecture (314, 500) ; et
- une phase, dite de traitement, réalisée hors de portée dudit utilisateur et comprenant les étapes suivantes :
■ lecture automatique de la donnée d'identification depuis chacune desdites premières étiquettes d'identification (304), par lesdits deuxièmes moyens de lecture (314,500),
■ écriture, sur des deuxièmes étiquettes d'identification (320), d'au moins une partie des données relatives audit transport associées à chacune desdites données d'identification lue, et
■ pose de chacune desdites deuxièmes étiquettes d'identification (320) sur chacun desdits objets (306).

3. Procédé selon l'une quelconque des revendications précédentes, **caractérisé en ce que** la phase de dépose comprend avant l'étape de lecture automatique de la première étiquette d'identification (304) par les premiers moyens de lecture, une identification de l'utilisateur (402) déposant l'objet (306) à transporter.

4. Procédé selon l'une quelconque des revendications précédentes, **caractérisé en ce qu'**il comprend en outre les étapes suivantes :
- lors de la phase de dépose, lecture ou prise d'une donnée biométrique de l'utilisateur,
- lors d'une phase d'embarquement :
■ lecture ou prise de la même donnée biométrique, et
■ comparaison de ladite donnée biométrique prise ou lue à celle prise ou lue lors de la phase de dépose.

5. Procédé selon l'une quelconque des revendications précédentes, **caractérisé en ce que** la première étiquette d'identification (402) électromagnétique est une étiquette RFID.

6. Procédé selon l'une quelconque des revendications 2 à 5, **caractérisé en ce que** la deuxième étiquette d'identification (402) est une étiquette RFID.

7. Procédé selon l'une quelconque des revendications 2 à 5, **caractérisé en ce que** la deuxième étiquette d'identification est une étiquette à code barre.

8. Procédé selon l'une quelconque des revendications précédentes, **caractérisé en ce que** les moyens de mémorisation (310) sont accessibles par un système d'information (308) d'une compagnie en charge du transport de l'objet.

9. Utilisation du procédé selon l'une quelconque des revendications précédentes pour la dépose automatique de bagages (306) dans un aéroport en vue du transport aérien desdits bagages.

10. Utilisation du procédé selon l'une quelconque des revendications 1 à 8 pour la dépose automatique de colis à transporter dans un lieu tel qu'un bureau de poste.

## Patentansprüche

1. Verfahren zur automatischen Ablage von Gegenständen (306) zur Förderung dieser Gegenstände (306), wobei das Verfahren umfasst:
- einen vorausgehenden Vorgang der Einspeicherung von Transportdaten durch einen Benutzer in Speichereinrichtungen (310), wobei jene Daten umfassen:
• Daten über den Benutzer (402), mit welchem jeder dieser Gegenstände (306) verbunden wird,
• Daten über die durch besagten Benutzer (402) angegebene Gesamtzahl dieser Gegenstände (306), und/oder
• Daten über den Zielort, die Route und den Zeitpunkt der Förderung;
- einen sogenannten Ablagevorgang, folgende Arbeitsschritte umfassend:
• Anbringung eines ersten elektromagnetischen Identifizierungsetiketts (304) auf jeden dieser zu transportierenden Gegenstände durch einen Benutzer,
• Ablage durch diesen Benutzer jedes dieser zu transportierenden Gegenstände auf Fördereinrichtungen,
• Ablesung durch erste Leseeinrichtungen (300, 410) eines Identifizierungsmerkmals an jedem dieser ersten elektromagnetischen Identifizierungsetiketten (304) und
• Speicherung auf diesen Speichereinrichtungen (310) jeder der besagten Identifizierungsdaten, die in Verbindung mit den vorab gespeicherten Daten über die besagte Förderung gelesen wird;
- einen Transportvorgang jedes dieser Gegenstände im Hinblick auf deren Transport; wobei besagter Ablageschritt außerdem ein Wiegen und/oder ein Messen jedes dieser Gegenstände (306) und/oder eine Einspeicherung in Speichereinrichtungen (310) dieses Gewichts und/oder dieser Abmessungen in Verbindung mit den Transportdaten umfasst.

2. Verfahren nach Anspruch 1, **dadurch gekennzeichnet, dass** es außerdem vor dem Vorgang der Förderung jedes dieser Gegenstände im Hinblick auf seinen Transport umfasst:
- einen Vorgang der Förderung jedes dieser Gegenstände zu zweiten Leseeinrichtungen (314, 500); und
- einen Vorgang der sogenannten Abwicklung außerhalb der Reichweite des Benutzers, folgende Arbeitsschritte umfassend:
• automatische Ablesung des Identifizierungsmerkmals an jedem dieser Identifizierungsetiketten (304) durch diese zweiten Leseeinrichtungen (314, 500),
• Erfassung auf zweiten Identifizierungsetiketten (320) wenigstens eines Teils der mit jedem dieser abgelesenen Identifizierungsdaten verbundenen Daten über besagten Transport, und
• Anbringung jedes dieser zweiten Identifizierungsetiketten (320) auf jeden dieser Gegenstände (306).

3. Verfahren nach einem der vorhergehenden Ansprüche, **dadurch gekennzeichnet, dass** der Ablagevorgang vor dem Arbeitsschritt der automatischen Ablesung des ersten Identifizierungsetiketts (304) durch die ersten Leseeinrichtungen eine Identifizierung des den zu fördernden Gegenstand ablegenden Benutzers (402) umfasst.

4. Verfahren nach einem der vorhergehenden Ansprüche, **dadurch gekennzeichnet, dass** es außerdem folgende Arbeitsschritte umfasst:
- während des Ablagevorgangs, Ablesung oder Erfassung eines biometrischen Merkmals des Benutzers,
- während eines Beladungsvorgangs:
• Ablesung oder Erfassung des selben biometrischen Merkmals, und
• Vergleich jenes besagten biometrischen, abgelesenen oder erfassten Merkmals mit dem Merkmal, das während des Ablagevorgangs erfasst oder abgelesen wurde.

5. Verfahren nach einem der vorhergehenden Ansprüche, **dadurch gekennzeichnet, dass** das erste elektromagnetische Identifizierungsetikett (402) ein RFID Etikett ist.

6. Verfahren nach einem der Ansprüche 2-5, **dadurch gekennzeichnet, dass** das zweite Identifizierungsetikett (402) ein RFID Etikett ist.

7. Verfahren nach einem der Ansprüche 2-5, **dadurch gekennzeichnet, dass** das zweite Identifizierungsetikett (402) ein Strichcode-Etikett ist.

8. Verfahren nach einem der vorhergehenden Ansprüche, **dadurch gekennzeichnet, dass** der Zugriff auf die Speichereinrichtungen (310) über ein Informationssystem (308) eines mit der Förderung des Gegenstands beauftragten Unternehmens erfolgt.

9. Anwendung des Verfahrens nach einem der vorhergehenden Ansprüche für die automatische Ablage von Gepäckstücken (306) in einem Flughafen im Hinblick auf den Lufttransport dieser Gepäckstücke.

10. Anwendung des Verfahrens nach einem der vorhergehenden Ansprüche 1-8 für die automatische Ablage von zu transportierenden Paketen in einem Ort wie einer Poststelle.

## Claims

1. A method for automatically depositing objects (306) for the purpose of the transport of said objects (306), said method comprising:
- a prior phase of storing by a user of data relating to the transport in storage means (310), said data comprising:
■ data relating to the user (402) with whom each of said objects (306) is associated,
■ data relating to the total number of said objects (306) declared by said user (402), and/or
■ data relating to the destination, the route and the time of the transport;
- a so-called depositing phase, comprising the following steps:
■ applying, by a user, a first electromagnetic identification tag (304) onto each of said objects to be transported,
■ placing, by said user, each of said objects to be transported on means of conveyance,
■ reading an identification data, by first reading means (300, 410), from each of said first electromagnetic identification tags (304), and
■ storing each of said identification data read in said storage means (310) in association with the previously stored data relating to said transport;
- a phase of conveying each of said objects for the purpose of its transport;
said depositing phase comprising moreover a measurement of the weight and/or dimensions of each of said objects (306) and/or storing, in storage means (310), of said weight and/or said dimensions in association with the data relating to the transport.

2. The method according to claim 1, **characterized in that** it comprises moreover, before the phase of conveying each of said objects for the purpose of its transport:
- a phase of conveying each of said objects to second reading means (314, 500); and
- a so-called processing phase, performed out of reach of said user and comprising the following steps:
■ automatic reading of the identification data from each of the first identification tags (304), by said second reading means (314, 500),
■ writing, on second identification tags (320), of at least a part of the data relating to said transport associated with each of said read identification data, and
■ placing each of said second identification tags (320) on each of said objects (306).

3. The method according to anyone of the previous claims, **characterized in that** the depositing phase comprises, before the step of automatic reading of the first identification tag (304) by the first reading means, an identification of the user (402) depositing the object (306) to be transported.

4. The method according to anyone of the preceding claims, **characterized in that** it also comprises the following steps:
- during the depositing phase, reading or taking a biometric data of the user,
- during a boarding phase:
■ reading or taking the same biometric data, and
■ comparison of said taken or read biometric data with the one taken or read during the depositing phase.

5. The method according to anyone of the previous claims, **characterized in that** the first electromagnetic identification tag (304) is an RFID tag.

6. The method according to anyone of claims 2 to 5, **characterized in that** the second identification tag (320) is an RFID tag.

7. The method according to anyone of claims 2 to 5, **characterized in that** the second identification tag is a barcode label.

8. The method according to anyone of the previous claims, **characterized in that** the storage means (310) are accessible by an information system (308) of a company responsible for the transport of the object.

9. Use of the method according to anyone of the previous claims for automatically depositing baggage items (306) at an airport for the purpose of the air transport of said baggage items.

10. Use of the method according to anyone of claims 1 to 8 for automatically depositing packages to be transported at a place such as a post office.
